# EUROPEAN PATENT APPLICATION

(11) **EP 4 668 451 A1**
(43) Date of publication of application: **24.12.2025**
(21) Application number: 24913464.4
(22) Date of filing: 26.11.2024
(51) Int. Cl.: H01M 50/367, H01M 50/342, H01M 50/375, H01M 50/107, H01M 4/70, H01M 50/249, H01M 10/0587

(54) **BATTERY, AND BATTERY PACK AND VEHICLE COMPRISING SAME**

(30) Priority: 27.12.2023 KR 20230193194; 28.03.2024 KR 20240042769
(71) Applicant: LG Energy Solution, Ltd., Seoul 07335 (KR)
(72) Inventor: KIM, Byung-Ju, Daejeon 34122 (KR)
(74) Representative: Goddar, Heinz J.
(86) International application number: PCT/KR2024/018896
(87) International publication number: WO 2025/143571

(57) **Abstract**

A battery according to an embodiment of the present disclosure may include: an electrode assembly having a winding structure around a central winding hole; a battery housing configured to receive the electrode assembly through an opening provided on one side; a battery cover configured to cover the opening of the battery housing and having a venting portion configured to be ruptured when an internal pressure of the battery housing exceeds a reference venting pressure; and a core support configured to be inserted into the central winding hole of the electrode assembly so as to increase rigidity of a core of the electrode assembly, and configured to guide a discharge direction of gas generated inside the electrode assembly toward the venting portion.

## Description

### TECHNICAL FIELD

The present disclosure relates to a battery, and a battery pack and vehicle including the same.

This application is based on and claims priority from Korean Patent Application No. 10-2023-0193194, filed on December 27, 2023, and Korean Patent Application No. 10-2024-0042769, filed on March 28, 2024,with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell is approximately 2.5V to 4.5V. Therefore, when an output voltage higher than this is required, a battery pack may be configured by connecting a plurality of batteries in series. In addition, a battery pack may be configured by connecting multiple batteries in parallel depending on the charge/discharge capacity required for the battery pack. Accordingly, the number of batteries included in the battery pack and electrical connections may be set in various ways depending on the required output voltage or charge/discharge capacity.

Meanwhile, a cylindrical battery may have a structure in which a jellyroll-type electrode assembly obtained by winding a laminate in which a negative electrode (positive electrode), a separator, a positive electrode (negative electrode), and a separator are sequentially laminated is stored in a roughly cylindrical battery housing.

The jellyroll-type electrode assembly applied to such a cylindrical battery may have a central winding hole formed in the core according to the winding. As the battery is repeatedly charged and discharged, the electrodes constituting the electrode assembly may repeat expansion and contraction.

The repetition of the expansion and contraction of the electrode may cause a core collapse phenomenon in which the electrode is partially bent on the inner wall of the central winding hole of the electrode assembly and protrudes toward the central winding hole. If this core collapse phenomenon occurs, the risk of a short circuit increases in the core of the electrode assembly, so it may be difficult to ensure the safety of using the secondary battery.

Therefore, it is necessary to devise a method capable of suppressing deformation of the core structure of the electrode assembly due to expansion and contraction of the electrode caused by repeated charging and discharging of the battery.

### DISCLOSURE

### Technical Problem

The present disclosure is designed to solve the problems of the related art, and therefore the present disclosure is directed to providing an electrode assembly having a structure capable of suppressing deformation of the core structure of the electrode assembly due to expansion and contraction of the electrode caused by repeated charging and discharging of the battery.

In another aspect, the present disclosure aims to smoothly dissipate pressure in a desired direction when the internal pressure increases during the use of the battery.

In another aspect, the present disclosure aims to minimize pressure transfer to the sides of the battery by smoothly dissipating pressure in a desired direction, thereby preventing chain ignition/explosion due to side rupture.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly having a winding structure around a central winding hole; a battery housing configured to receive the electrode assembly through an opening provided on one side; a battery cover configured to cover the opening of the battery housing and having a venting portion configured to be ruptured when an internal pressure of the battery housing exceeds a reference venting pressure; and a core support configured to be inserted into the central winding hole of the electrode assembly so as to increase rigidity of a core of the electrode assembly, and configured to guide a discharge direction of gas generated inside the electrode assembly toward the venting portion.

The core support may have a hollow structure.

The core support may be configured to have electrical insulation.

The core support may include a rupture portion configured to rupture if at least one of conditions in which pressure due to gas generated inside the electrode assembly exceeds a reference rupture pressure and in which temperature inside the battery housing exceeds a reference rupture temperature is satisfied.

The rupture portion may be provided at a position closer to a second end, among longitudinal both ends of the core support, located opposite a first end located in a direction toward the battery cover, than to the first end.

The core support may be configured so that a first end, among longitudinal both ends, located in a direction toward the battery cover is open and so that a second end located opposite the first end is closed.

A plurality of rupture portions may be provided, and the plurality of rupture portions may be provided to be spaced apart from each other along a circumference of the core support.

The battery housing may have a beading portion configured to be recessed inward from an outer circumferential surface.

A space surrounded by the beading portion may be filled with a reinforcement member.

The battery may include a current collector electrically connected to the electrode assembly and interposed between the battery cover and the electrode assembly.

The current collector may have a current collector hole formed at a position corresponding to the central winding hole.

A diameter of the current collector hole may be formed to be greater than a diameter of the central winding hole.

A diameter of the current collector hole may be formed to be greater than an inner diameter of the core support.

In another aspect of the present disclosure, there is provided a battery pack including a battery according to the present disclosure.

In another aspect of the present disclosure, there is provided a vehicle including a battery pack according to the present disclosure.

### Advantageous Effects

According to one aspect of the present disclosure, it is possible to suppress deformation of the core structure of the electrode assembly due to expansion and contraction of the electrode caused by repeated charging and discharging of the battery.

According to another aspect of the present disclosure, it is possible to smoothly dissipate the pressure in a desired direction when the internal pressure increases during the use of the battery.

According to another aspect of the present disclosure, it is possible to minimize the pressure transfer to the sides of the battery by smoothly dissipating the pressure in a desired direction, thereby preventing chain ignition/explosion of the batteries due to side rupture.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating the upper portion structure of a battery according to an embodiment of the present disclosure.
FIG. 2 is a cross-sectional view of an electrode assembly according to an embodiment of the present disclosure.
FIG. 3 is a drawing illustrating a core collapse phenomenon occurring in a core region of an electrode assembly to which a core support of the present disclosure is not applied.
FIGS. 4 to 7 are drawings illustrating various embodiments of the core support of the present disclosure.
FIG. 8 is a drawing illustrating a structure of a battery to which a reinforcement member is applied according to an embodiment of the present disclosure.
FIG. 9 is a drawing illustrating comparison of the inner diameter of a core support, the diameter of a central winding hole, and the diameter of a current collector hole in a battery according to an embodiment of the present disclosure.
FIG. 10 is a drawing illustrating the lower portion structure of a battery according to an embodiment of the present disclosure.
FIG. 11 is a drawing illustrating a battery pack according to an embodiment of the present disclosure.
FIG. 12 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

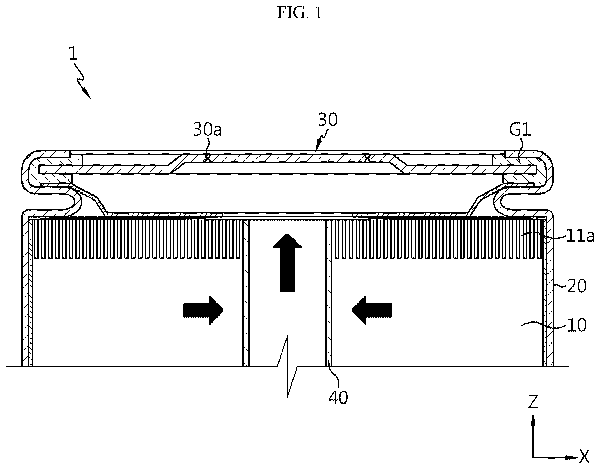

Hereinafter, the overall structure of a battery 1 according to an embodiment of the present disclosure will be described with reference to FIGS. 1 to 7.

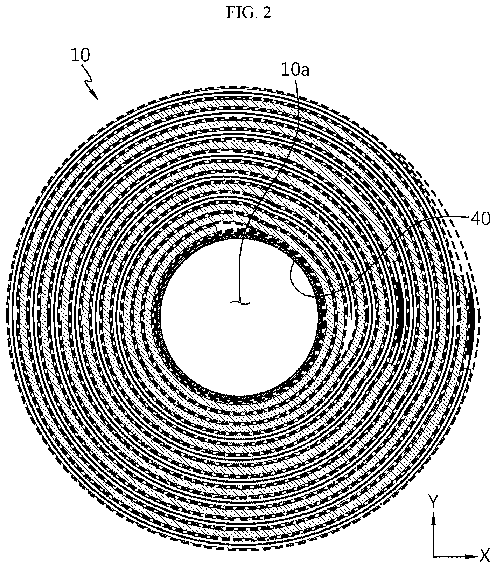

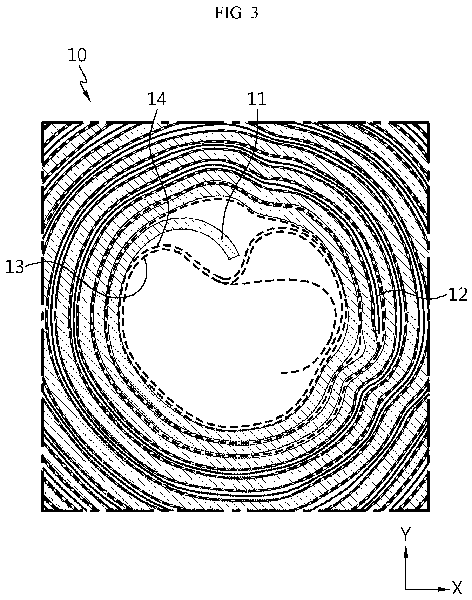

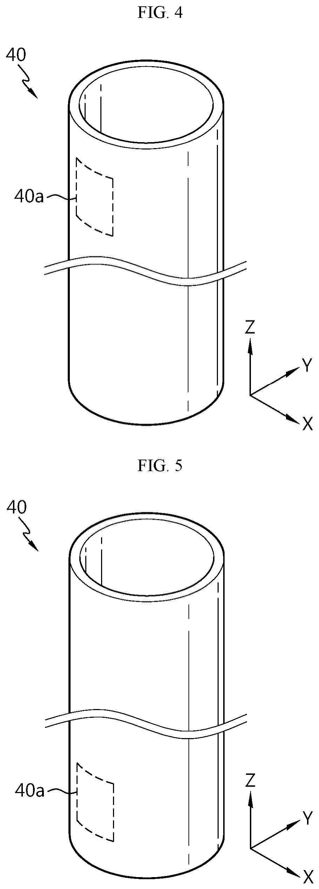

FIG. 1 is a drawing illustrating the upper portion structure of a battery according to an embodiment of the present disclosure, FIG. 2 is a cross-sectional view of an electrode assembly according to an embodiment of the present disclosure, FIG. 3 is a drawing illustrating a core collapse phenomenon occurring in a core region of an electrode assembly to which a core support of the present disclosure is not applied, and FIGS. 4 to 7 are drawings illustrating various embodiments of the core support of the present disclosure.

Referring to FIG. 1, a battery 1 according to an embodiment of the present disclosure may include an electrode assembly 10, a battery housing 20, a battery cover 30, and a core support 40. The battery 1 may be a secondary battery. The battery 1 may be a cylindrical battery.

Referring to FIGS. 1 and 2, the electrode assembly 10 may have a winding structure around a central winding hole 10a formed in the core. The electrode assembly 10 may include a first electrode 11, a second electrode 12, and a first separator 13 interposed between the first electrode 11 and the second electrode 12. The electrode assembly 10 may be manufactured by sequentially laminating the first electrode 11, the first separator 13, and the second electrode 12 and winding the laminate. The electrode assembly 10 may further include a second separator 14. In this case, the second separator 14 may be configured to cover the outer circumferential surface of the electrode assembly 10.

The first electrode 11 may have a first uncoated portion 11a formed along the winding direction at one end. The first uncoated portion 11a may be formed at one end of the first electrode 11 constituting the electrode assembly 10. The first uncoated portion 11a may extend in the winding direction of the electrode assembly 10. The first uncoated portion 11a may be provided on one side of the electrode assembly 10, and may extend, for example, upward from the electrode assembly 10.

The battery housing 20 may be configured to receive the electrode assembly 10 through an opening provided on one side. The battery housing 20 may include a conductive metal. The battery housing 20 may be electrically connected to the electrode assembly 10. An electrolyte may be accommodated together with the electrode assembly 10 inside the battery housing 20.

The battery cover 30 may be configured to cover the opening of the battery housing 20. The battery cover 30 may be provided with a venting portion 30a configured to be ruptured when the internal pressure of the battery housing 20 exceeds a reference venting pressure. The venting portion 30a may be a region configured to be more vulnerable than other regions surrounding the battery cover 30. The venting portion 30a may be, for example, a region that is thinner than the remaining regions of the battery cover 30. The venting portion 30a may be, for example, a region having notches on both sides. The venting portion 30a may be configured as a closed loop extending to surround the approximate center of the battery cover 30. The venting portion 30a may be formed continuously or discontinuously. As described above, if the battery 1 of the present disclosure is provided with the venting portion 30a, even if an abnormality occurs in the battery 1, the internal pressure of the battery 1 may be prevented from increasing above a certain level.

Meanwhile, the battery 1 of the present disclosure may include a first gasket G1 interposed between the battery cover 30 and the battery housing 20 in the area covered by the battery cover 30. The first gasket G may strengthen the sealing force in the area covered by the battery cover 30.

Referring to FIGS. 4 to 7 in addition to FIG. 1, the core support 40 may be inserted into the central winding hole 10a of the electrode assembly 10. The core support 40 may be configured to increase the rigidity of the core of the electrode assembly 10. The core support 40 above may be configured to guide the discharge direction of gas generated inside the electrode assembly 10 toward the venting portion 30a. The core support 40 may have a hollow structure. The core support 40 may be configured to have electrical insulation. The core support 40 may include, for example, a ceramic material.

As the core support 40 is provided, the core collapse phenomenon may be prevented from occurring on the inner wall of the central winding hole 10a. This is due to the fact that the rigidity of the inner wall of the central winding hole 10a of the electrode assembly 10 may be increased by the core support 40.

As the charging and discharging of the battery 1 is repeated, the expansion and contraction of the electrodes 11 and 12 constituting the electrode assembly 10 are repeated, and accordingly, the end of the first electrode 11 may bend toward the core of the electrode assembly 10. This bending of the end of the first electrode 11 may cause damage to the first separator 13 forming the inner wall of the central winding hole 10a, which may increase the risk of a short circuit occurring in the area adjacent to the core of the electrode assembly 10. Therefore, by applying a structure capable of improving the rigidity of the core of the electrode assembly 10 according to the present disclosure, the problem caused by the core collapse phenomenon may be solved.

Referring to FIG. 1, when the venting portion 30a of the battery cover 30 is ruptured due to an increase in the internal pressure of the battery 1 caused by gas generated inside the electrode assembly 10, the core support 40 may guide the flow of the gas toward the venting portion 30a. That is, the gas may flow from the inside of the electrode assembly 10 into the core support 40, and the introduced gas may be guided toward the venting portion 30a that is ruptured. If the flow of gas from the inside of the electrode assembly 10 toward the venting portion 30a is blocked by the core support 40 provided to improve the rigidity of the core of the electrode assembly 10, the pressure may be applied to the sides of the battery 1. If the pressure is applied to the sides of the battery 1, as described above, to break the sides, a chain reaction of ignition and/or explosion may occur in the batteries 1 disposed adjacently. The battery 1 of the present disclosure may solve this problem by having the core support 40 configured to increase the rigidity of the core of the electrode assembly 10 and also to induce pressure discharge through the core of the electrode assembly 10.

Referring to FIGS. 4 to 7, the core support 40 may have a rupture portion 40a. The rupture portion 40a may be configured to rupture when at least one of the conditions in which the pressure due to the gas generated inside the electrode assembly 10 exceeds a reference rupture pressure and in which the temperature inside the battery housing 20 exceeds a reference rupture temperature is satisfied. The rupture portion 40a may rupture when the conditions described above are satisfied, thereby allowing the inner space of the electrode assembly 10 and the inner space of the core support 40 to communicate with each other. The rupture portion 40a may be configured to have a lower rigidity than the remaining area of the core support 40. The rupture portion 40a may be a region of the core support 40 with a reduced thickness. The rupture portion 40a may be configured to have a lower melting point than the remaining area of the core support 40. The melting point of the rupture portion 40a may be controlled, for example, by selecting a material and/or reducing the thickness.

Referring to both FIG. 5 and FIG. 1, the rupture portion 40a may be provided at a position closer to a second end located opposite a first end located in the direction toward the battery cover 30, among longitudinal both ends of the core support 40, than to the first end. If the rupture portion 40a is provided at such a position, gas may be smoothly discharged through the inner space of the core support 40 even at a position far from the venting portion 30a.

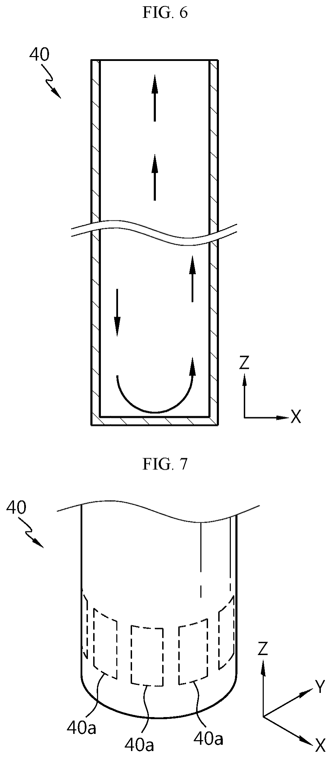

Referring to both FIG. 1 and FIG. 6, the core support 40 may have a structure in which the first end located in the direction toward the battery cover 30, among the longitudinal both ends, is open and in which the second end located on the opposite side of the first end is closed. If the core support 40 of the present disclosure has such a structure, the gas introduced into the core support 40 from the electrode assembly 10 may naturally move toward the venting portion 30a, thereby enabling smooth gas discharge.

Referring to both FIG. 1 and FIG. 7, a plurality of rupture portions 40a may be provided. The plurality of rupture portions 40a may be provided to be spaced apart from each other along the circumference of the core support 40. Although not shown in the drawing, the plurality of rupture portions 40a may be provided to be spaced apart from each other along the vertical extension direction of the core support 40. In the case where the plurality of rupture portions 40a are provided as described above, gas may be more smoothly discharged through the inner space of the core support 40.

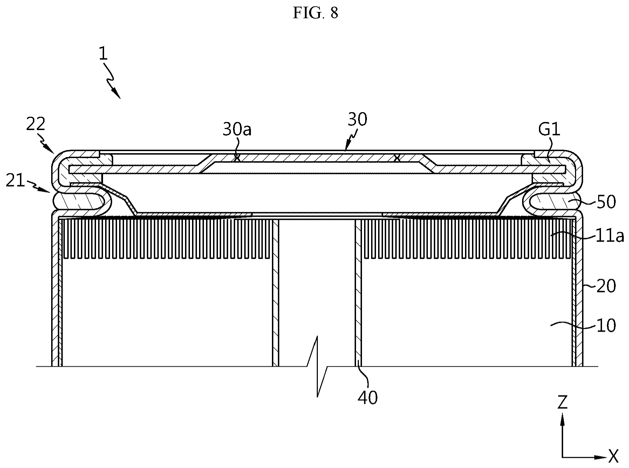

Next, the reinforcement member 50 of the present disclosure will be described with reference to FIG. 8.

FIG. 8 is a drawing illustrating a structure of a battery to which a reinforcement member is applied according to an embodiment of the present disclosure.

Referring to FIG. 8, the battery housing 20 may have a beading portion 21 that is recessed inward from the outer circumferential surface. The beading portion 21 may be provided at a position adjacent to the opening of the battery housing 20. The beading portion 21 may function as a stopper to prevent the electrode assembly 10 from popping out of the battery housing 20. The beading portion 21 may function as a seating portion that supports the battery cover 30. The battery housing 20 may be provided with a crimping portion 22 that extends and bends from the beading portion 21 so as to wrap around the edge of the battery cover 30.

The space surrounded by the beading portion 21 may be filled with a reinforcement member 50. The reinforcement member 50 may prevent a breakage from occurring in the area where the beading portion 21, which may be structurally vulnerable in the battery housing 20, is formed.

The beading portion 21 may be formed, for example, by pressing the outer surface of the battery housing 20 with a beading tool. In this case, the battery housing 20 may be elongated in the area where the beading portion 21 is formed, and thus the thickness of the battery housing 20 may be reduced. Therefore, the area where the beading portion 21 is formed may be highly likely to preferentially rupture when the internal pressure of the battery 1 increases. The reinforcement member 50 may be applied to reinforce the rigidity of the battery housing 20 in the area where the beading portion 21 is formed, considering that the beading portion 21 may be structurally vulnerable as described above, thereby preventing the side of the battery 1 from breaking before pressure is dissipated through the venting portion 30a.

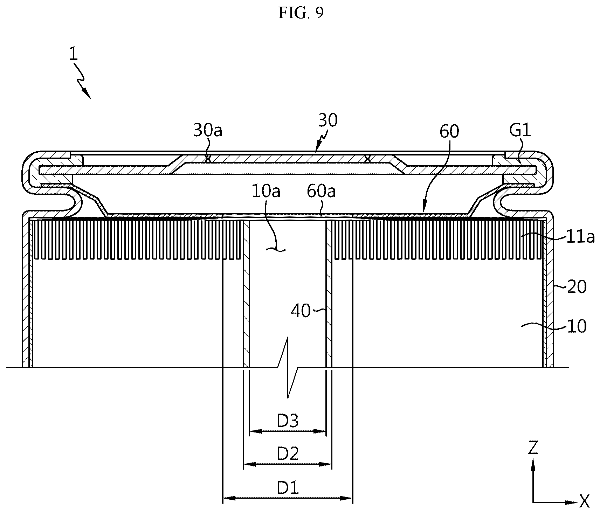

Next, the current collector (first current collector) 60 of the present disclosure will be described with reference to FIG. 9.

FIG. 9 is a drawing illustrating comparison of the inner diameter of a core support, the diameter of a central winding hole, and the diameter of a current collector hole in a battery according to an embodiment of the present disclosure.

Referring to FIG. 9, a battery 1 according to an embodiment of the present disclosure may include a current collector (first current collector) 60. The current collector 60 may be interposed between the battery cover 30 and the electrode assembly 10. The current collector 60 may be electrically coupled to the electrode assembly 10. The current collector 60 may be electrically coupled to, for example, the first uncoated portion 11a provided on the first electrode 11 of the electrode assembly 10. The current collector 60 may be electrically connected to the battery housing 20. The current collector 60 may be electrically coupled to the inner surface of the battery housing 20. The current collector 60 may be coupled to the beading portion 21 (see FIG. 8) of the battery housing 20.

The current collector 60 may have a current collector hole 60a formed at a position corresponding to the central winding hole 10a of the electrode assembly 10. The diameter D1 of the current collector hole 60a may be formed greater than the diameter D2 of the central winding hole 10a. In this case, when the internal pressure increases abnormally due to an abnormality of the battery 1, the internal gas may be smoothly discharged through the venting portion 30a, and the core of the electrode assembly 10 may be smoothly discharged through the ruptured venting portion 30a. If the pressure inside the battery 1 increases beyond a critical pressure, the wound laminate may be unwound from the inner wall of the central winding hole 10a, and accordingly, the core of the electrode assembly 10 may come out along the pressure discharge direction. In this case, by facilitating movement of the electrode assembly 10, the pressure may also be dissipated smoothly along the movement direction of the electrode assembly 10.

In another aspect, the diameter D1 of the current collector hole 60a may be formed greater than the inner diameter D3 of the core support 40. The core support 40 may have an opening at one end facing the battery cover 30, and if the current collector 60 covers the opening of the core support 40, the gas discharge effect through the core support 40 may be reduced.

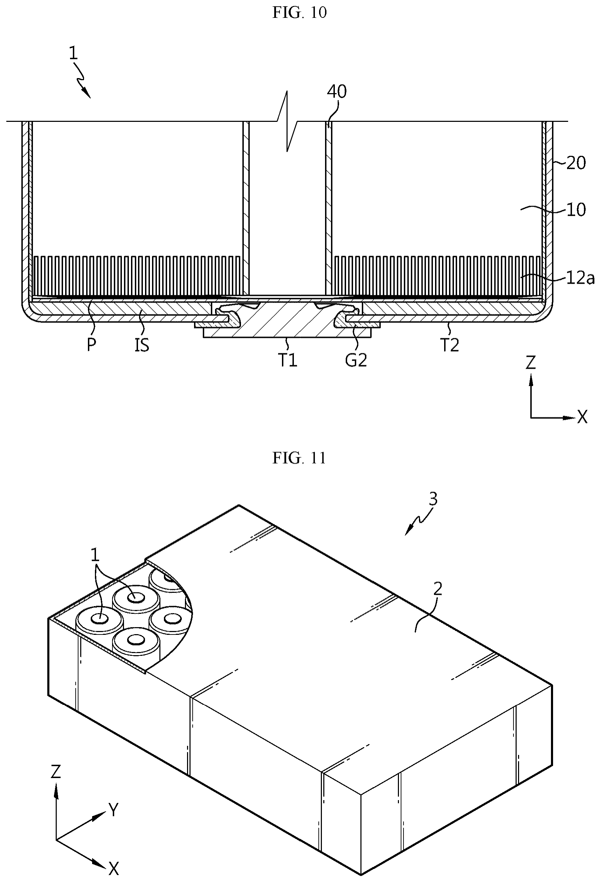

Next, the lower portion structure of the battery 1 according to an embodiment of the present disclosure will be described with reference to FIG. 10.

FIG. 10 is a drawing illustrating the lower portion structure of a battery according to an embodiment of the present disclosure.

Referring to FIG. 10, the battery 1 may include a battery terminal T1. The battery terminal T1 may be electrically connected to the electrode assembly 10. The battery terminal T1 may be electrically connected to the second electrode 12 of the electrode assembly 10. The battery terminal T1 may be electrically insulated from the battery housing 20. A second gasket G2 may be provided between the battery terminal T1 and the battery housing 20. Accordingly, the battery terminal T1 may function as a first electrode terminal of the battery 1.

The battery terminal T1 may be partially inserted into the inside of the battery housing 20 through a closed portion provided on the opposite side of the opening of the battery housing 20. As described above, in the case where the battery terminal T1 is provided on the closed portion of the housing 20, the closed portion of the battery housing 20 may function as a second electrode terminal T2. Therefore, the battery 1 of the present disclosure may have a structure in which both the positive electrode terminal and the negative electrode terminal are provided on the closed portion of the battery housing 20. As described above, in the case where both the positive electrode terminal and the negative electrode terminal are provided on one side of the battery 1, the work of electrically connecting multiple batteries 1 may be facilitated, and the electrical connection structure may be simplified, thereby improving energy density.

The battery 1 may include a current collector (second current collector) P configured to electrically connect the battery terminal T1 and the electrode assembly 10. The current collector P may be electrically connected to the second electrode 12 of the electrode assembly 10. The current collector P may be electrically coupled to the second uncoated portion 12a provided on the second electrode 12. The second uncoated portion 12a may extend along the winding direction of the electrode assembly 10 at one end of the second electrode. The second uncoated portion 12a may be provided on the opposite side of the side where the first uncoated portion 11a is provided, among both sides of the electrode assembly 10, and may extend, for example, downward in the electrode assembly 10.

The current collector P may be electrically coupled to the battery terminal T1. For example, the current collector P and the battery terminal T1 may be welded by radiating a laser or inserting a tool for welding through the central winding hole 10a of the electrode assembly 10 from the opening of the battery housing 20.

In the case where the battery 1 of the present disclosure has the current collector P, an insulator IS may be interposed between the current collector P and the closed portion of the battery housing 20. The insulator IS may prevent contact between the current collector P and the battery housing 20 having different polarities.

Next, a battery pack 3 according to an embodiment of the present disclosure will be described with reference to FIG. 11. FIG. 11 is a drawing illustrating a battery pack according to an embodiment of the present disclosure.

Referring to FIG. 11, the battery pack 3 according to an embodiment of the present disclosure may include at least one battery 1 of the present disclosure described above. The battery 1 may be stored inside a pack housing 2. The battery pack 3 may include components for electrical connection of the batteries 1 and/or a BMS (Battery Management System) configured to control charging and discharging of the batteries 1.

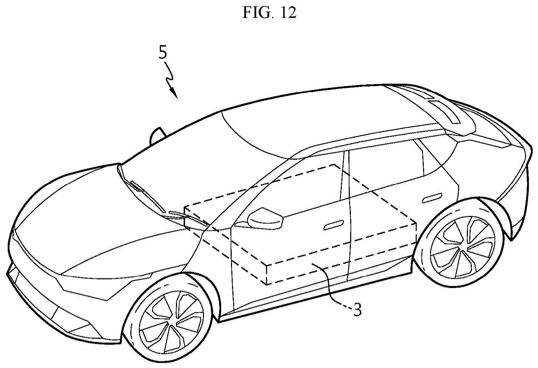

Next, a vehicle 5 according to an embodiment of the present disclosure will be described with reference to FIG. 12. FIG. 12 is a drawing illustrating a vehicle according to an embodiment of the present disclosure.

Referring to FIG. 12, the vehicle 5 according to an embodiment of the present disclosure includes at least one battery pack 3. The vehicle 5 may be configured to operate by power supplied from the battery pack 3. The vehicle 5 may be, for example, a hybrid vehicle (HEV) or an electric vehicle (EV).

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

### [Description of Reference numerals]

1: Battery
2: Pack housing
3: Battery pack
5: Vehicle
10: Electrode assembly
10a: Central winding hole
11: First electrode
11a: First uncoated portion
12: Second electrode
12a: Second uncoated portion
13: First separator
14: Second separator
20: Battery housing
21: Beading portion
22: Crimping portion
30: Battery cover
30a: Venting portion
G1: First gasket
40: Core support
40a: Rupture portion
50: Reinforcement member
60: Current collector (first current collector)
60a: Current collector hole
T1: Battery terminal (first electrode terminal)
T2: Closed portion (second electrode terminal)
G2: Second gasket
P: Current collector (second current collector)
IS: insulator

## Claims

1. A battery comprising:
an electrode assembly having a winding structure around a central winding hole;
a battery housing configured to receive the electrode assembly through an opening provided on one side;
a battery cover configured to cover the opening of the battery housing and having a venting portion configured to be ruptured when an internal pressure of the battery housing exceeds a reference venting pressure; and
a core support configured to be inserted into the central winding hole of the electrode assembly so as to increase rigidity of a core of the electrode assembly, and configured to guide a discharge direction of gas generated inside the electrode assembly toward the venting portion.

2. The battery according to claim 1,
wherein the core support has a hollow structure.

3. The battery according to claim 1,
wherein the core support is configured to have electrical insulation.

4. The battery according to claim 1,
wherein the core support comprises a rupture portion configured to rupture if at least one of conditions in which pressure due to gas generated inside the electrode assembly exceeds a reference rupture pressure and in which temperature inside the battery housing exceeds a reference rupture temperature is satisfied.

5. The battery according to claim 4,
wherein the rupture portion is provided at a position closer to a second end, among longitudinal both ends of the core support, located opposite a first end located in a direction toward the battery cover, than to the first end.

6. The battery according to claim 1,
wherein the core support is configured so that a first end, among longitudinal both ends, located in a direction toward the battery cover is open and so that a second end located opposite the first end is closed.

7. The battery according to claim 4,
wherein a plurality of rupture portions are provided, and
wherein the plurality of rupture portions are provided to be spaced apart from each other along a circumference of the core support.

8. The battery according to claim 1,
wherein the battery housing has a beading portion configured to be recessed inward from an outer circumferential surface.

9. The battery according to claim 8,
wherein a space surrounded by the beading portion is filled with a reinforcement member.

10. The battery according to claim 1,
further comprising a current collector electrically connected to the electrode assembly and interposed between the battery cover and the electrode assembly.

11. The battery according to claim 10,
wherein the current collector has a current collector hole formed at a position corresponding to the central winding hole.

12. The battery according to claim 11,
wherein a diameter of the current collector hole is formed to be greater than a diameter of the central winding hole.

13. The battery according to claim 11,
wherein a diameter of the current collector hole is formed to be greater than an inner diameter of the core support.

14. A battery pack comprising a battery according to any one of claims 1 to 13.

15. A vehicle comprising a battery pack according to claim 14.
